# EUROPEAN PATENT APPLICATION

(11) **EP 4 727 235 A1**
(43) Date of publication of application: **15.04.2026**
(21) Application number: 23940138.3
(22) Date of filing: 08.06.2023
(51) Int. Cl.: H04W 72/0453

(54) **INFORMATION PROCESSING METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2023/099242
(87) International publication number: WO 2024/250252

(57) **Abstract**

Embodiments of the present disclosure provide an information processing method and apparatus, a communication device and a storage medium. The information processing method is executed by a terminal, and comprises: sending request information, wherein the request information is used for requesting to perform bandwidth aggregation on a positioning reference signal.

## Description

### TECHNICAL FIELD

The present disclosure relates to, but is not limited to, the technical field of wireless communication, and in particular relates to an information processing method and apparatus, a communication device, and a storage medium.

### BACKGROUND

In the New Radio (NR) system, terminals and/or network devices may achieve positioning based on positioning reference signals; however, the performance of positioning technologies based on positioning reference signals largely depends on the configuration of positioning reference signals. To improve positioning performance, in Release 17 (R-17) NR positioning, on-demand positioning reference signals are introduced, that is, requesting appropriate positioning reference signal configurations based on the needs of terminals or core network devices.

However, due to the limitation of the maximum bandwidth of the carrier, the positioning reference signal configuration is difficult to meet the positioning accuracy requirements of the 5th Generation (5G) mobile communication technology.

### SUMMARY

The embodiments of the present disclosure provide an information processing method and apparatus, a communication device and a storage medium.

The first aspect of the present disclosure provides an information processing method, performed by a terminal, including:
sending request information, where the request information is used for requesting to perform bandwidth aggregation on positioning reference signals.

The second aspect of the present disclosure provides an information processing method, performed by a network device, including:
receiving request information, where the request information is used for requesting to perform bandwidth aggregation on positioning reference signals.

The third aspect of the present disclosure provides an information processing apparatus applied to a terminal, including:
a sending module, configured to send request information, where the request information is used for requesting to perform bandwidth aggregation on positioning reference signals.

The fourth aspect of the present disclosure provides an information processing apparatus applied to a network device, including:
a receiving module, configured to receive request information, where the request information is used for performing bandwidth aggregation on positioning reference signals.

The fifth aspect of the present disclosure provides a communication device, including a processor, a transceiver, a memory, and an executable program stored in the memory and executable by the processor, where the processor, when executing the executable program, performs the information processing method as provided in the first aspect or second aspect above.

The sixth aspect of the present disclosure provides a computer storage medium having an executable program stored thereon; where the executable program, when executed by a processor, is able to implement the information processing method as provided in the first aspect or second aspect above.

In the embodiments of the present disclosure, a terminal sends a request message to a network device to request, through the request message, the network device to perform bandwidth aggregation on positioning reference signals across multiple different frequency domain resources. Measuring the positioning reference signal after bandwidth aggregation yields a frequency gain, thereby improving the positioning accuracy of the terminal and reducing the impact of inaccurate terminal positioning on information transmission performance.

For the technical solutions provided in the embodiments of the present disclosure, it should be understood that the above general description and the following detailed description are exemplary and explanatory only, and are not intended to limit the embodiments of the present disclosure.

### BRIEF DESCRIPTION OF THE DRAWINGS

The accompanying drawings herein are incorporated into and constitute a part of the description, illustrate embodiments consistent with the present disclosure, and are used together with the description to explain the principles of the embodiments of the present disclosure.
FIG. 1 is a schematic structural diagram of a wireless communication system shown according to an exemplary embodiment;
FIG. 2 is a first schematic flowchart diagram of an information processing method shown according to an exemplary embodiment;
FIG. 3 is a schematic flowchart diagram of an NR positioning process based on on-demand PRS shown according to an exemplary embodiment;
FIG. 4 is a second schematic flowchart diagram of an information processing method shown according to an exemplary embodiment;
FIG. 5 is a third schematic flowchart diagram of an information processing method shown according to an exemplary embodiment;
FIG. 6 is a fourth schematic flowchart diagram of an information processing method shown according to an exemplary embodiment;
FIG. 7 is a fifth schematic flowchart diagram of an information processing method shown according to an exemplary embodiment;
FIG. 8 is a first structural schematic diagram of an information processing apparatus shown according to an exemplary embodiment;
FIG. 9 is a second structural schematic diagram of an information processing apparatus shown according to an exemplary embodiment;
FIG. 10 is a schematic structural diagram of a UE shown according to an exemplary embodiment;
FIG. 11 is a schematic structural diagram of a communication device shown according to an exemplary embodiment.

### DETAILED DESCRIPTION

Exemplary embodiments are be described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the embodiments of the present disclosure. To the contrary, they are merely examples of apparatuses and methods that are consistent with some aspects of the embodiments of the present disclosure.

Terms used in the embodiments of the present disclosure are used solely for the purpose of describing certain embodiments and are not intended to limit the embodiments of the present disclosure. The singular forms of "a/an", "said" and "the" used in the embodiments of the present disclosure are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, and such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word as used herein may be interpreted as "when..." or "while..." or "in response to determination".

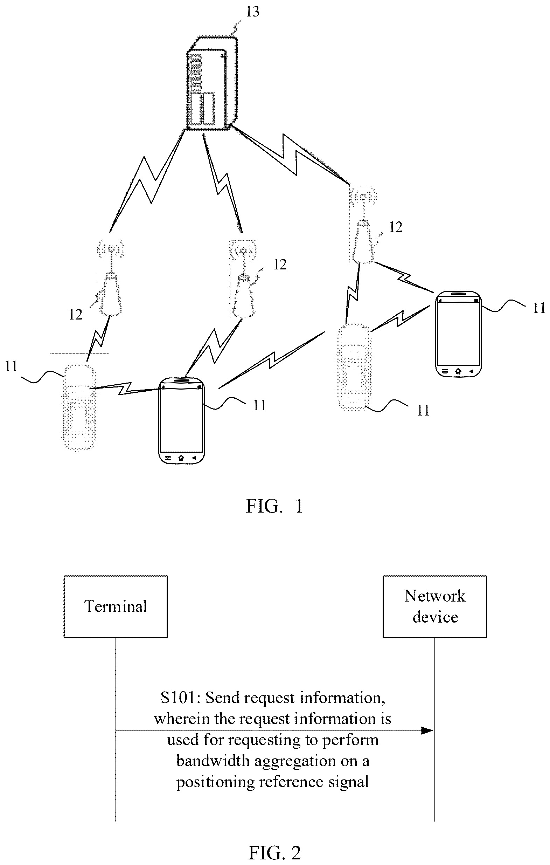

Referring to FIG. 1, a schematic structural diagram of a wireless communication system provided by an embodiment of the present disclosure is illustrated. As shown in FIG. 1, the wireless communication system is a communication system based on cellular mobile communication technology, and the wireless communication system may include: several UEs 11, several access devices 12, and several core network devices 13.

The terminal 11 may refer to a device that provides voice and/or data connectivity to a user. The terminal 11 may communicate with one or more core networks via a radio access network (RAN). The terminal 11 may be an Internet of Things (IoT) terminal, such as a sensor device, a mobile phone (or a cellular phone), and a computer with an IoT terminal. For example, it may be a fixed, portable, pocketsized, handheld, computer-built-in, or vehicle-mounted device, for example, a station (STA), a subscriber unit, a subscriber station, a mobile station, a mobile, a remote station, an access point, a remote terminal, an access terminal, a user terminal, a user agent, a user device, or a user equipment (UE). Alternatively, the terminal 11 may also be a device of an unmanned aerial vehicle. Alternatively, the terminal 11 may also be a vehicle-mounted device, such as a driving computer with a wireless communication function, or a wireless communication device connected to an external driving computer. Alternatively, the terminal 11 may also be a roadside device, for example, a street lamp, a signal lamp or other roadside device with a wireless communication function.

The access device 12 may be a network side device in a wireless communication system. The wireless communication system may be a 4th mobile communication technology (4G) system, also known as a long term evolution (LTE) system; or, the wireless communication system may be a 5G system, also known as a new radio (NR) system or a 5G NR system. Alternatively, the wireless communication system may be a next generation system of the 5G system. The access network in the 5G system may be referred to as a new generation-radio access network (NG-RAN). Alternatively, it may be an MTC system.

The access device 12 may be an evolved access device (eNB) used in a 4G system. Alternatively, the access device 12 may also be an access device (gNB) using a centralized and distributed architecture in a 5G system. When the access device 12 uses the centralized and distributed architecture, it usually includes a central unit (CU) and at least two distributed units (DUs). The central unit is provided with protocol stacks of a packet data convergence protocol (PDCP) layer, a radio link layer control protocol (Radio Link Control, RLC) layer, and a media access control (MAC) layer; and the distributed unit is provided with a protocol stack of a physical (PHY) layer. The specific implementation manner of the access device 12 is not limited by the embodiments of the present disclosure.

A wireless connection may be established between access device 12 and the terminal 11 through a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface may also be a wireless air interface based on the next generation mobile communication network technology standard of 5G.

Several access network devices 12 are respectively connected to the core network device 13. The core network device 13 may be a core network device in a wireless communication system. For example, the core network device 13 may be a mobility management entity (MME) in the evolved packet core (EPC). Alternatively, the core network device may also be other types of core network devices, such as a serving gateway (SGW), a public data network gateway (PGW), a policy and charging rules function (PCRF), or a home subscriber server (HSS), etc. Additionally, the core network device 13 may be a core network device in 5G, such as a policy control function (PCF), a session management function (SMF), an access and mobility management function (AMF), a unified data management (UDM), or a user plane function (UPF), etc. The embodiments of the present disclosure do not impose limitations on the implementation form of the core network device 13.

As shown in FIG. 2, an embodiment of the present disclosure provides an information processing method executed by a terminal, where the method further includes the following.

In S101, request information is sent, where the request information is used for requesting to perform bandwidth aggregation on positioning reference signals.

The terminal may be various types of communication devices. It may be a mobile terminal or a fixed terminal.

The terminal may be a mobile phone, a tablet computer, an intelligent office device, a smart home device, a vehicle-mounted device, and/or an aerial device.

For example, the terminal may send request information to a network device to request the network device to perform bandwidth aggregation on positioning reference signals. By performing bandwidth aggregation on positioning reference signals, the bandwidth for transmitting and receiving positioning reference signals can be effectively increased, thereby achieving higher positioning accuracy.

The network device may be an access network device or a core network device; here, the access network device may be various types of base stations, such as a base station in the 3rd generation (3G) mobile communication network, a base station in the 4th generation (4G) mobile communication network, a base station in the 5th generation (5G) mobile communication network, or other evolved base stations.

It should be noted that the positioning reference signal is a reference signal that may be used to determine the spatial position of a terminal; for example, the positioning reference signal includes but is not limited to: a downlink positioning reference signal (PRS) and/or an uplink sounding reference signal (SRS).

The terminal may measure the PRSs sent by multiple access network devices, report the measurement results to a core network device, and the core network device perform positioning for the terminal based on the measurement results. It can be understood that by measuring the multiple received PRSs, the terminal can obtain information such as the reference signal time difference (RSTD) and/or reference signal receiving power (RSRP) of the PRSs, and report the aforementioned information to the core network device. The core network device then positions the terminal based on the known locations of various access network devices and the aforementioned information.

Alternatively, the terminal may send sounding reference signals (SRS) to multiple access network devices. The access network devices perform measurement based on the received SRSs, report the measurement results to a core network device, and the core network device positions the terminal based on the measurement results from the multiple access network devices. It can be understood that by measuring the received SRS, the access network device can obtain information such as the reference signal receiving power (RSRP), azimuth of arrival (AoA), and/or zenith of arrival (ZoA) of the SRS, and report the aforementioned information to the core network device. The core network device then positions the terminal based on the known location of each access network device and the aforementioned information.

In the embodiments of the present disclosure, the request information is used for requesting to perform bandwidth aggregation on multiple positioning reference signals in the frequency domain. The bandwidth-aggregated positioning reference signals can be equivalent to a positioning reference signal with a larger bandwidth. Here, the multiple positioning reference signals may be on different frequency resources or on different carriers.

The core network device includes, but is not limited to, the location management function (LMF).

It can be understood that, according to positioning principles, the greater the bandwidth of the positioning reference signal used for positioning, the higher the positioning accuracy will be. However, due to the limitation of the maximum bandwidth of the carrier, the bandwidth of a single positioning reference signal cannot be effectively increased. Based on this, in the embodiments of the present disclosure, a terminal may send request information to a network device to request the network device to perform bandwidth aggregation on multiple positioning reference signals. Thus, during the positioning process, the terminal and/or the access network device can measure the multiple positioning reference signals as a single aggregated positioning signal with a larger bandwidth, so as to achieve more accurate positioning of the terminal.

In some embodiments, the request information may further include: resource location information of the multiple positioning reference signals for bandwidth aggregation; the resource location information is used to indicate the locations of radio resources used for transmitting the multiple positioning reference signals. The resource location information may include, but is not limited to: frequency domain parameters and/or time domain parameters.

Frequency domain parameters are used to indicate the frequency domain positions of positioning reference signals. In an embodiment, the frequency domain parameter may include, but is not limited to: a frequency domain reference point, a bandwidth, a bandwidth part (BWP), a sub-carrier spacing (SCS), a starting physical resource block, and/or a resource unit offset, etc.

Time domain parameters are used to indicate the time domain positions of positioning reference signals. In one embodiment, the time domain parameter may include, but is not limited to: a starting slot position, a starting symbol position, the number of occupied symbols, the number of transmissions and/or a transmission time interval, etc.

In some embodiments, the request information may further include information about antenna ports that support positioning reference signal aggregation, etc.

In the embodiments of the present disclosure, the terminal sends a request message to a network device to request, through the request message, the network device to provide a positioning reference signal configuration that supports bandwidth aggregation over multiple different frequency domain resources. Measuring the positioning reference signal after performing bandwidth aggregation yields a frequency gain, thereby improving the positioning accuracy of the terminal and reducing the impact of inaccurate terminal positioning on information transmission performance.

In some embodiments, the request information includes: an on-demand positioning reference signal (PRS) request; or a sounding reference signal (SRS) request.

In this embodiment of the disclosure, the terminal sends an on-demand positioning reference signal (PRS) request to the core network device, and uses the on-demand PRS request to request the core network device to provide multiple downlink positioning reference signals (PRSs) that can be bandwidth aggregated.

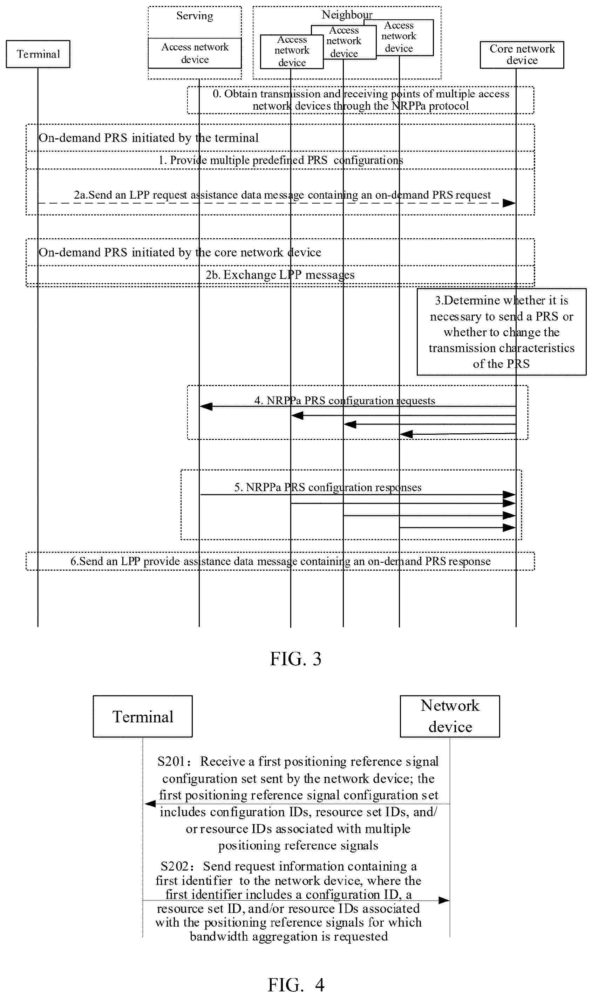

It should be noted that, in order to better meet the positioning requirements of terminals, on-demand PRS is introduced in New Radio (NR) positioning. As shown in FIG. 3, the specific process of NR positioning based on on-demand PRS includes the following.

In step 0, the core network device obtains relevant information about the transmission and receiving points (TRPs) of multiple access network devices through the new radio positioning protocol (NRPPa).

For the on-demand PRS request initiated by the terminal:
In step 1, the core network device provides the terminal with multiple predefined PRS configurations.
In step 2a, the terminal sends an LPP request assistance data containing the on-demand PRS request to the core network device.

For the on-demand PRS request initiated by core network device:
In step 2b: the core network device and the terminal exchange LPP messages to determine the configuration of on-demand PRS;
In step 3, the core network equipment determines whether it is necessary to send a PRS or whether to change the transmission characteristics of the PRS.
In step 4, the core network device sends NRPPa PRS configuration requests to multiple access network devices.
In step 5, the multiple access network devices send NRPPa PRS configuration responses to the core network device.
In step 6, the core network device sends an LPP provide assistance data message containing an on-demand PRS response to the terminal.

In an embodiment, the on-demand PRS request includes at least one of the following: a PRS configuration requested by the terminal; and a PRS configuration identifier requested by the terminal.

It can be understood that the terminal may send the on-demand PRS request to the core network device according to its own needs, so that the core network device can provide the PRS configuration to the terminal based on the terminal's on-demand PRS request. After obtaining the PRS configuration, the terminal receives the PRS based on the PRS configuration and completes the positioning measurement.

The terminal may also send the sounding reference signal (SRS) request to the access network device, requesting the access network device to provide multiple uplink sounding reference signals (SRSs) that are able to be bandwidth aggregated. In an embodiment, the SRS request includes at least one of the following: an SRS configuration requested by the terminal; and an SRS configuration identifier requested by the terminal.

Here, the SRS is an uplink positioning reference signal, which is a positioning reference signal sent by the terminal to the access network device. Before sending the SRS, the terminal may first send an SRS request to the access network device. This allows the access network device to configure SRS resources for the terminal based on the SRS request from the terminal, and specifically based on the SRS configuration or SRS configuration identifier contained in the SRS request, so that the terminal can send the SRS, and to complete the positioning measurement.

In the embodiments of the present disclosure, the terminal sends the on-demand PRS request and/or the SRS request to the network device. Through the on-demand PRS request and/or the SRS request, the terminal requests the network device to provide positioning reference signals on multiple different frequency domain resources that support bandwidth aggregation, so that the bandwidth-aggregated positioning reference signal has a larger bandwidth, thereby improving the positioning accuracy of the terminal.

In some embodiments, the request information includes at least one of the following:
frequency information, indicating frequency layers, carriers, frequency layer combinations and/or carrier combinations for bandwidth aggregation;
priority information, indicating priorities corresponding to the frequency layer combinations and/or the carrier combinations;
a first identifier (ID), including a configuration ID, a resource set ID, and/or resource IDs associated with the positioning reference signals for which bandwidth aggregation is requested;
a second identifier (ID), including a predefined positioning reference signal configuration, where the predefined positioning reference signal configuration is a positioning reference signal configuration configured with bandwidth aggregation;
an access device indication, indicating an access device that performs bandwidth aggregation on the positioning reference signals.

In the embodiments of the present disclosure, the request information may include frequency information of multiple positioning reference signals for which bandwidth aggregation is requested.

Here, the frequency information is used to indicate the frequency layers, carriers, frequency layer combinations, and/or carrier combinations of the positioning reference signals to be aggregated. In summary, the frequency information can identify the frequency layers of the PRSs and/or the carriers of the SRSs for which bandwidth aggregation is to be performed.

It should be noted that the frequency domain resources on a frequency layer or carrier are a collection of frequency domain resources used for transmitting positioning reference signals. The terminal sends frequency information to the network device to indicate the frequency domain resource positions of the positioning reference signals for which the terminal requests to perform bandwidth aggregation.

In an embodiment, the frequency information may be carried by a bitmap, where one indication bit in the bitmap corresponds to one frequency layer or carrier. It should be noted that the length of the bitmap depends on the number of frequency layers or carriers supported by the terminal. Specifically, each indication bit in the bitmap corresponds to one frequency layer or carrier supported by the terminal. The indication bit is used to indicate whether the terminal requests bandwidth aggregation for that frequency layer or carrier.

For example, an indication bit of "1" in the bitmap is used to indicate that the terminal requests bandwidth aggregation for that frequency layer or carrier; an indication bit of "0" in the bitmap is used to indicate that the terminal requests no bandwidth aggregation for that frequency layer or carrier.

In another embodiment, the frequency information may be carried by multiple bitmaps, where each bitmap corresponds to one frequency layer combination or one carrier combination.

It can be understood that the terminal sends frequency information to the network device based on one or more frequency layers or carriers it supports, so that the network device can know the frequency domain resource positions of the positioning reference signals for which the terminal requests bandwidth aggregation.

In some embodiments, the frequency information includes: a frequency band indication, which indicates multiple frequency layers and/or carriers of the positioning reference signals for bandwidth aggregation; and/or a frequency band combination indication, which indicates combinations of frequency layers and/or combinations of carriers capable of being bandwidth aggregated.

In the embodiments of the present disclosure, the frequency information may include: a frequency band indication and/or a frequency band combination indication. The frequency band indication is used to indicate multiple frequency layers and/or carriers of positioning reference signals for bandwidth aggregation. The frequency band combination indication is used to indicate multiple frequency layer combinations and/or carrier combinations of positioning reference signals capable of bandwidth aggregation. Each frequency layer combination includes multiple frequency layers, and each carrier combination includes multiple carriers.

It can be understood that the terminal sends a frequency band indication to request the network device to perform bandwidth aggregation on the multiple frequency layers and/or carriers indicated by the frequency band indication. Through the frequency band combination indication, the terminal requests the network device to perform bandwidth aggregation on the multiple frequency layers within each frequency layer combination indicated by the frequency band combination indication, or to perform bandwidth aggregation on the multiple carriers within each carrier combination indicated by the frequency band combination indication.

In an embodiment, the frequency information for PRS includes one of the following: the frequency band indication, which indicates the frequency layers of PRSs for bandwidth aggregation; and the frequency band combination indication, which indicates the frequency layer combinations of PRSs capable of bandwidth aggregation.

In another embodiment, the frequency information for SRS includes one of the following: the frequency band indication, which indicates the carriers of SRSs for bandwidth aggregation; the frequency band combination indication, which indicates the carrier combinations of SRSs capable of bandwidth aggregation.

In some embodiments, the request information may further include priority information, where the priority information indicates the priorities corresponding to the frequency layer combinations and/or the carrier combinations.

It can be understood that for the multiple frequency layer combinations and/or carrier combinations capable of bandwidth aggregation as indicated by the frequency information, the frequency layer combination and/or carrier combination with the highest priority is determined based on the priority information corresponding to each frequency layer combination and/or carrier combination. Bandwidth aggregation is then performed on the multiple frequency layers within the frequency layer combination and/or on the multiple carriers within the carrier combination.

In one embodiment, if the frequency information of the PRS includes the frequency band combination indication;
the request information for the on-demand PRS further includes priority information indicating the priorities of the frequency layer combinations of the PRS.

In another embodiment, if the frequency information of the SRS includes the frequency band combination indication;
the request information for the SRS further includes priority information indicating the priorities of the carrier combinations of the SRS.

In some embodiments, the request information may further include a first identifier (ID), which includes the configuration ID, the resource set ID, and/or the resource IDs associated with the positioning reference signals for which bandwidth aggregation is requested.

The resource ID may be used to uniquely identify a positioning reference signal resource. A positioning reference signal resource may be the smallest granularity of a positioning reference signal configuration, and one positioning reference signal resource corresponds to a transmission beam, a carrier, or a frequency layer of one positioning reference signal.

The resource set ID may be used to uniquely identify a positioning reference signal resource set. A positioning reference signal resource set is a group of positioning reference signal resources used for transmitting positioning reference signals. The positioning reference signal resources within a positioning reference signal resource set have the same period, number of symbols, etc. One positioning reference signal resource set may include one or more positioning reference signal resources.

The configuration ID may be used to uniquely identify the positioning reference signal configuration. Different positioning reference signal configurations have different configuration IDs.

The network device may send multiple predefined sets of positioning reference signal configurations to the terminal. It can be understood that the positioning requirements that various sets of positioning reference signal configurations can meet may be different. The terminal may select one set of positioning reference signal configurations from the multiple sets of positioning reference signal configurations for positioning measurement based on its own positioning requirements. It should be noted that the transmission periods, transmission bandwidths, and/or transmission resources of the positioning reference signals corresponding to different positioning reference signal configurations are different.

As shown in FIG. 4, an embodiment of the present disclosure provides an information processing method, which is executed by a terminal device. The method includes the following.

In step S201, a first positioning reference signal configuration set sent by the network device is received; the first positioning reference signal configuration set includes configuration IDs, resource set IDs, and/or resource IDs associated with multiple positioning reference signals.

In step S202, request information containing a first identifier is sent to the network device, where the first identifier includes a configuration ID, a resource set ID, and/or resource IDs associated with the positioning reference signals for which bandwidth aggregation is requested.

In the embodiments of the present disclosure, the first positioning reference signal configuration set may include multiple positioning reference signal configurations predefined by the network device for the terminal. The positioning reference signal configurations include the configuration IDs, the resource set IDs, and/or resource IDs associated with the corresponding positioning reference signals.

The network device sends the first positioning reference signal configuration set to the terminal, so that the terminal device may select a configuration ID, a resource set ID, and/or resource IDs associated with the positioning reference signals that meet the needs of the terminal device based on multiple positioning reference signal configurations in the first positioning reference signal configuration set, and send the configuration ID, the resource set ID, and/or the resource IDs associated with the positioning reference signals to the network device, and request the network device to perform bandwidth aggregation on the positioning reference signals associated with the configuration ID, the resource set ID, and/or the resource IDs.

In some embodiments, the request information may further include a second identifier (ID), which includes a predefined positioning reference signal configuration, where the predefined positioning reference signal configuration is a positioning reference signal configuration configured with bandwidth aggregation.

It should be noted that the second identifier (ID) may be used to indicate the predefined positioning reference signal configuration. It should also be noted that the network device predefines multiple positioning reference signal configurations for the terminal (i.e., a second positioning reference signal configuration set), and the second positioning reference signal configuration set includes at least one positioning reference signal configuration configured with bandwidth aggregation. Each positioning reference signal configuration in the second positioning reference signal configuration set has an identifier.

The terminal sends request information carrying the second identifier (ID) to inform the network device of the positioning reference signal configuration requested by the terminal. If the terminal needs to perform bandwidth aggregation on the positioning reference signals, it may add the ID corresponding to the positioning reference signal configuration configured with bandwidth aggregation to the request information to request the network device to perform bandwidth aggregation on the positioning reference signals. If the terminal does not need to perform bandwidth aggregation on the positioning reference signals, it may add the ID corresponding to another positioning reference signal configuration to the request information.

In an embodiment, the positioning reference signal configuration may include at least one of the following: a bandwidth part (BWP) identifier (ID) corresponding to the positioning reference signal resource; a frequency layer ID corresponding to the positioning reference signal resource; an access network device ID corresponding to the positioning reference signal resource; a TRP ID corresponding to the positioning reference signal resource; a positioning reference signal resource set ID; and a positioning reference signal resource ID.

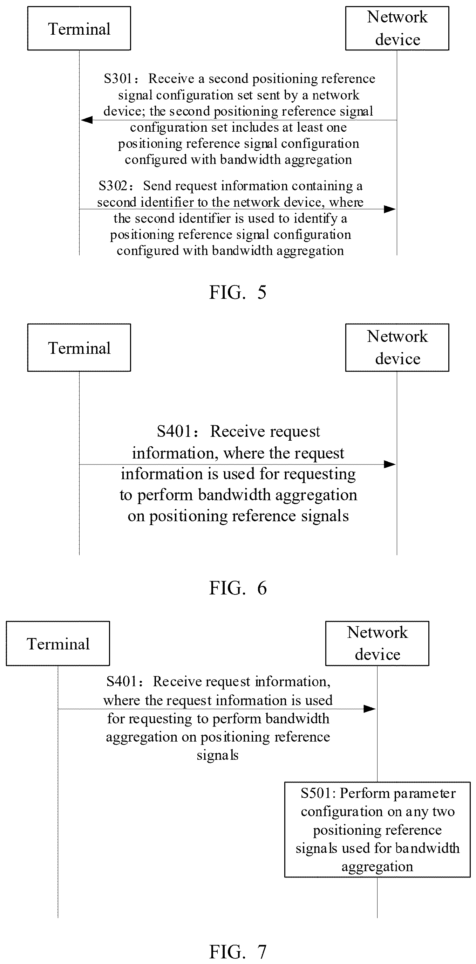

As shown in FIG. 5, an embodiment of the present disclosure provides an information processing method, which is executed by a terminal device. The method includes the following.

In step S301, a second positioning reference signal configuration set sent by a network device is received; the second positioning reference signal configuration set includes at least one positioning reference signal configuration configured with bandwidth aggregation.

In step S302, request information containing a second identifier is sent to the network device.

In the embodiments of the present disclosure, the second positioning reference signal configuration set may include multiple positioning reference signal configurations predefined by the network device for the terminal. At least one of the multiple positioning reference signal configurations is associated with positioning reference signals that are capable of bandwidth aggregation.

The network device sends the second positioning reference signal configuration set to the terminal, so that the terminal device can select the positioning reference signal configuration associated with the positioning reference signal for positioning measurement based on the multiple positioning reference signal configurations in the second positioning reference signal configuration set.

If the second identifier carried by the terminal in the request information is the ID corresponding to the positioning reference signal configuration configured with bandwidth aggregation, it indicates that the terminal requests to perform bandwidth aggregation on the positioning reference signals associated with the positioning reference signal configuration configured with bandwidth aggregation.

If the second identifier carried by the terminal in the request information is the ID corresponding to another positioning reference signal configuration in the second positioning reference signal configuration set, it indicates that the terminal requests to use the positioning reference signal corresponding to this positioning reference signal configuration for positioning measurement, but does not request to perform bandwidth aggregation on the positioning reference signal corresponding to this positioning reference signal configuration.

In some embodiments, the request information may further include an access device indication, which indicates the access device that performs bandwidth aggregation on the positioning reference signals. It should be noted that the access device may be a base station or a TRP, and the access device indication may include a base station ID and/or a TRP ID.

One access device may be associated with one or more positioning reference signal resource sets, and each positioning reference signal resource set may include one or more positioning reference signal resources.

The terminal may send request information containing the access device indication to the network device to inform the network device that the terminal requests to perform bandwidth aggregation on the positioning reference signals associated with the access device corresponding to the access device indication.

In an embodiment, a terminal may send request information to a network device. The request information includes frequency information, priority information, and/or an access device indication.

It can be understood that in cases where the network device does not preconfigure positioning reference signals for the terminal (i.e., the network device does not send the first positioning reference signal configuration set or the second positioning reference signal configuration set to the terminal), the terminal may directly send a request message containing frequency information, priority information, and/or an access device indication to the network device, so as to request the network device to determine multiple positioning reference signals for bandwidth aggregation based on the request message, thereby completing the bandwidth aggregation of the multiple positioning reference signals.

It should be noted that the first identifier (or the second identifier) is an ID corresponding to one positioning reference signal configuration selected by the terminal from multiple positioning reference signal configurations in the first positioning reference signal configuration set (or the second positioning reference signal configuration set) sent by the network device. In cases where the network device does not preconfigure positioning reference signals for the terminal, the request information sent by the terminal will not carry the first identifier or the second identifier. In this scenario, to implement bandwidth aggregation for multiple positioning reference signals, the terminal may directly send a request message containing frequency information, priority information, and/or an access device indication. That is, the terminal actively informs the network device of its own configuration requirements for positioning reference signals and requests the network device to configure the required positioning reference signal resources for the terminal, thereby implementing bandwidth aggregation for multiple positioning reference signals and meeting the terminal's positioning needs.

In the embodiments of the present disclosure, by carrying frequency information, priority information, a first identifier (ID), a second identifier (ID), and/or an access device indication in the request information, the network device can determine, based on the request information, multiple positioning reference signal resources for which the terminal requests bandwidth aggregation, thereby completing the configuration of the multiple positioning reference signal resources and implementing bandwidth aggregation of the multiple positioning reference signals. In the subsequent positioning process, the bandwidth-aggregated positioning reference signal is used for performing positioning measurement, thereby improving the positioning accuracy of the terminal.

In some embodiments, the frequency information includes at least one of the following: frequency band numbers; offsets relative to a reference frequency value and/or bandwidths; identifiers of bandwidth parts (BWPs).

In the embodiment of the present disclosure, the frequency band numbers are used to indicate the frequency bands of the positioning reference signals for which the transmission bandwidths are aggregated. The offset relative to the reference frequency value may be the frequency offset between a reference frequency point and a measurement frequency point. In an embodiment, the reference frequency point may be reference point A or reference point B; the offset relative to the reference frequency value may be the point A frequency offset (offset of Point A) or the Point B frequency offset (offset of Point B).

The identifiers of the BWPs are used to indicate the BWPs where the frequency layers and/or the carriers for bandwidth aggregation are located, or to indicate the locations of the frequency layers and/or the carriers for bandwidth aggregation on the BWPs.

The terminal sends frequency information including frequency band numbers, offsets relative to a reference frequency value, bandwidths, and/or BWP identifiers to inform the network device that the terminal requests to perform bandwidth aggregation on the positioning reference signals associated with the above frequency information, so that the network device can configure resources for the positioning reference signals associated with the above frequency information.

In some embodiments, at least one of the following parameters of any two positioning reference signals undergoing bandwidth aggregation is the same: the resource periodicity; the resource set periodicity; the bandwidth; the number of resources occupied by one positioning reference signal; the repetition parameter of the positioning reference signal.

It should be noted that the resource periodicity, the resource set periodicity, the resource bandwidth, the number of resources occupied by one positioning reference signal, and resource repetition parameter (resource repetition factor) are configuration parameters of the positioning reference signal.

The prerequisite for performing bandwidth aggregation on two positioning reference signals is that the parameter values of one or more configuration parameters among the resource periodicity, the resource set periodicity, the bandwidth, the number of resources occupied by the positioning reference signal, and the repetition parameter of the positioning reference signal of the two positioning reference signals are the same.

In this embodiment of the present disclosure, the terminal sends request information to request the network device to perform resource configuration on any two positioning reference signals for which the terminal requests bandwidth aggregation, such that the configuration parameters of any two positioning reference signal resources for bandwidth aggregation satisfy the prerequisite conditions for performing bandwidth aggregation, thereby facilitating bandwidth aggregation on any two positioning reference signals requested by the terminal.

In some embodiments, the number of resources occupied by one positioning reference signal includes: the number of time units occupied by one positioning reference signal; where the time units include: symbols, mini-slots, or slots; or the number of comb resources occupied by one positioning reference signal.

In the embodiments of the present disclosure, the number of time units occupied by one positioning reference signal is used to describe the number of time-domain resources occupied by the positioning reference signal. The time units include: symbols, mini-slots, or slots.

The positioning reference signal resource may have comb structures, and the terminal may send the positioning reference signal on one of the comb structures. The number of comb resources (Comb Size N) is used to describe the number of inner subcarriers carrying the positioning reference signal in each symbol period of the positioning reference signal resource configuration. For example, if the number of comb resources occupied by the positioning reference signal is 4, it indicates that the positioning reference signal is carried on every 4th subcarrier of the positioning symbol.

In the embodiment of the present disclosure, through the transmission of the request information, after the network device receives the request information, it performs resource configuration on any two positioning reference signals for bandwidth aggregation based on the terminal's request. This ensures that the number of time units or the number of comb resources occupied by any two positioning reference signals is the same, thereby enabling the configuration parameters of any two positioning reference signal resources for which bandwidth aggregation is requested to meet the prerequisite conditions for bandwidth aggregation, and facilitating bandwidth aggregation on any two positioning reference signals requested by the terminal.

In some embodiments, sending request information includes:
sending request information for downlink on-demand positioning reference signal (PRS) to a core network device; or
sending request information for uplink sounding reference signal (SRS) to an access network device.

In the embodiments of the present disclosure, the positioning reference signal may include: an uplink sounding reference signal (SRS) and a downlink on-demand positioning reference signal (PRS).

Since the SRS is transmitted by the terminal to the access network device, in order for the access network device to receive multiple bandwidth-aggregated SRSs and perform positioning measurement based on these bandwidth-aggregated SRSs, the terminal may send SRS request information to the access network device. This allows the access network device to configure SRS resources for the terminal based on the SRS request information thereby enabling the terminal to transmit SRSs, and to complete the positioning measurement.

Since the on-demand PRS is transmitted by the access network device to the terminal, in order for the terminal to receive multiple bandwidth-aggregated on-demand PRSs and perform positioning measurement based on these bandwidth-aggregated on-demand PRSs, the terminal may send on-demand PRS request information to the core network device according to its own needs. This enables the core network device to provide PRS configuration to the terminal based on the on-demand PRS request information. After obtaining the PRS configuration, the terminal receives the on-demand PRSs based on the PRS configuration and completes the positioning measurement.

In some embodiments, the request information is carried in a long term evolution positioning protocol (LPP) request assistance data message sent to the core network device.

In the embodiments of the present disclosure, the terminal may add the request information for on-demand PRS to the LPP request assistance data message, and then send the LPP request assistance data message to the core network device, so that the core network device obtains the request information for on-demand PRS from the LPP request assistance data message.

It should be noted that the LPP message is a signaling message between the terminal and the core network device used for exchanging information such as positioning capabilities. Here, the terminal may carry the request information for on-demand PRS in an uplink LPP message.

In an embodiment, the LPP request assistance data message includes one or more information fields for carrying PRS request messages. The information field may include multiple bits, where the multiple bits may be used to indicate frequency information, priority information, a first identifier (ID), a second identifier (ID), and/or an access device indication of multiple positioning reference signals for bandwidth aggregation.

In the embodiments of the present disclosure, the terminal adds the request information for on-demand PRS to a dedicated signaling message. While the terminal and the core network device transmit the dedicated signaling message, the terminal sends the request information for on-demand PRS to the core network device to request the core network device to perform bandwidth aggregation on the PRSs. In this way, there is no need for additional signaling or messages to carry and send the request information, which can reduce signaling overhead.

In some embodiments, the request information sent to the access network device is carried in a radio resource control (RRC) message; or in a media access control control element (MAC CE).

In the embodiment of the present disclosure, the terminal may add the request information for SRS to an RRC message, and then send the RRC message carrying the request information for SRS to the access network device, so that the access network device obtains the request information for SRS from the RRC message.

It should be noted that RRC messages are signaling messages required for establishing, reestablishing, maintaining, and releasing RRC connections between the terminal and the access network device. Here, the terminal may carry the request information for SRS in an uplink RRC message.

It can be understood that the terminal may carry different request information for SRS by setting any one or more bits in the RRC message to different bit values.

The terminal may also add the request information for SRS to the MAC CE and then send the MAC CE to the terminal so that the access network device can obtain the request information for SRS from the MAC CE.

It should be noted that MAC CE is a signaling message required for the terminal and access network device to exchange MAC layer control information.

In the embodiments of the present disclosure, the terminal adds the request information for SRS to a dedicated signaling message. While the terminal and the access network device transmit the dedicated signaling message, the terminal sends the SRS request information to the access network device to request the access network device to perform bandwidth aggregation on the SRSs. In this way, there is no need for additional signaling or messages to carry and send the request information, which can reduce signaling overhead.

As shown in FIG. 6, an embodiment of the present disclosure provides an information processing method, which is executed by a network device, and the method includes the following.

In step S401: request information is received, where the request information is used to perform bandwidth aggregation on positioning reference signals.

In the embodiments of the disclosure, the network device receives request information sent by the terminal.

In the embodiments of the present disclosure, the request information is used for requesting to perform bandwidth aggregation on multiple positioning reference signals in the frequency domain. The bandwidth-aggregated positioning reference signals can be equivalent to a positioning reference signal with a larger bandwidth. Here, the multiple positioning reference signals may be on different frequency resources or on different carriers.

It can be understood that, according to positioning principles, the greater the bandwidth of the positioning reference signal used for positioning, the higher the positioning accuracy will be. However, due to the limitation of the maximum bandwidth of the carrier, the bandwidth of a single positioning reference signal cannot be effectively increased. Based on this, in the embodiments of the present disclosure, a terminal may send request information to a network device to request the network device to perform bandwidth aggregation on multiple positioning reference signals. Thus, during the positioning process, the terminal and/or the access network device can measure the multiple positioning reference signals as a single aggregated positioning signal with a larger bandwidth, so as to achieve more accurate positioning of the terminal.

In some embodiments, the request information may further include: resource location information of the multiple positioning reference signals for bandwidth aggregation; the resource location information is used to indicate the locations of radio resources used for transmitting the multiple positioning reference signals. The resource location information may include, but is not limited to: frequency domain parameters and/or time domain parameters.

In some embodiments, the request information may further include information about antenna ports that support positioning reference signal aggregation, etc.

In this embodiment of the present disclosure, the network device receives the request message sent by a terminal. Based on the request message, the network device performs bandwidth aggregation on positioning reference signals located on multiple different frequency domain resources. Measuring the positioning reference signal after performing bandwidth aggregation yields a frequency gain, thereby improving the positioning accuracy of the terminal and reducing the impact of inaccurate terminal positioning on information transmission performance.

In some embodiments, the request information includes: an on-demand positioning reference signal (PRS) request; or a sounding reference signal (SRS) request.

In this embodiment of the present disclosure, the network device may receive an on-demand positioning reference signal (PRS) request sent by the terminal, and perform bandwidth aggregation on multiple downlink PRSs based on the terminal's on-demand PRS request. Here, the network device may be a core network device.

In an embodiment, the on-demand PRS request includes at least one of the following: a PRS configuration requested by the terminal; and a PRS configuration identifier requested by the terminal.

After receiving the on-demand PRS request, the core network device provides PRS configuration to the terminal according to the terminal's on-demand PRS request. After obtaining the PRS configuration, the terminal receives the PRS based on the PRS configuration and completes the positioning measurement.

The network device receives a sounding reference signal (SRS) request sent by the terminal, and performs bandwidth aggregation on multiple uplink sounding reference signals (SRSs) based on the terminal's SRS request. Here, the network device may be an access network device.

In an embodiment, the SRS request includes at least one of the following: an SRS configuration requested by the terminal; and an SRS configuration identifier requested by the terminal.

Here, the access network device receives the SRS request and configures SRS resources for the terminal based on the SRS configuration or SRS configuration identifier in the terminal's SRS request so that the terminal can send SRS, and completes the positioning measurement.

In the embodiments of the present disclosure, the network device receives the on-demand PRS request and/or SRS request. Based on the terminal's on-demand PRS request and/or SRS request, the network device performs bandwidth aggregation on positioning reference signals located on multiple different frequency domain resources. This enables the bandwidth-aggregated positioning reference signal to have a larger bandwidth, thereby improving the positioning accuracy of the terminal.

In some embodiments, the request information includes at least one of the following:
frequency information, indicating frequency layers, carriers, frequency layer combinations and/or carrier combinations for bandwidth aggregation;
priority information, indicating priorities corresponding to the frequency layer combinations and/or the carrier combinations;
a first identifier (ID), including a configuration ID, a resource set ID, and/or resource IDs associated with the positioning reference signals for which bandwidth aggregation is requested;
a second identifier (ID), including a predefined positioning reference signal configuration, where the predefined positioning reference signal configuration is a positioning reference signal configuration configured with bandwidth aggregation;
an access device indication, indicating an access device that performs bandwidth aggregation on the positioning reference signals.

In the embodiments of the present disclosure, the request information may include frequency information of multiple positioning reference signals for which bandwidth aggregation is requested.

Here, the frequency information is used to indicate the frequency layers, carriers, frequency layer combinations, and/or carrier combinations of the positioning reference signals to be aggregated. In summary, the frequency information can identify the frequency layers of the PRSs and/or the carriers of the SRSs for which bandwidth aggregation is to be performed.

It should be noted that the frequency domain resources on a frequency layer or carrier are a collection of frequency domain resources used for transmitting positioning reference signals. The network device may determine the frequency domain resource positions of the positioning reference signals for which the terminal requests to perform bandwidth aggregation based on the frequency information sent by the terminal.

In an embodiment, the frequency information may be carried by a bitmap, where one indication bit in the bitmap corresponds to one frequency layer or carrier. It should be noted that the length of the bitmap depends on the number of frequency layers or carriers supported by the terminal. Specifically, each indication bit in the bitmap corresponds to one frequency layer or carrier supported by the terminal. The indication bit is used to indicate whether the terminal requests bandwidth aggregation for that frequency layer or carrier. For example, an indication bit of "1" in the bitmap is used to indicate that the terminal requests bandwidth aggregation for that frequency layer or carrier; an indication bit of "0" in the bitmap is used to indicate that the terminal requests no bandwidth aggregation for that frequency layer or carrier.

In another embodiment, the frequency information may be carried by multiple bitmaps, where each bitmap corresponds to one frequency layer combination or one carrier combination. It can be understood that the terminal sends frequency information to the network device based on one or more frequency layers or carriers it supports, so that the network device can know the frequency domain resource positions of the positioning reference signals for which the terminal requests bandwidth aggregation.

In some embodiments, the frequency information includes: a frequency band indication, which indicates multiple frequency layers and/or carriers of the positioning reference signals for bandwidth aggregation; and/or a frequency band combination indication, which indicates combinations of frequency layers and/or combinations of carriers capable of being bandwidth aggregated.

In the embodiments of the present disclosure, the frequency information may include: a frequency band indication and/or a frequency band combination indication. The frequency band indication is used to indicate multiple frequency layers and/or carriers of positioning reference signals for bandwidth aggregation. The frequency band combination indication is used to indicate multiple frequency layer combinations and/or carrier combinations of positioning reference signals capable of bandwidth aggregation. Each frequency layer combination includes multiple frequency layers, and each carrier combination includes multiple carriers.

It can be understood that the network device receives a frequency band indication, and determines multiple frequency layers and/or carriers for which the terminal requests bandwidth aggregation based on the frequency band indication. The network device receives a frequency band combination indication, and determines multiple frequency layer combinations and/or carrier combinations for which the terminal requests bandwidth aggregation based on the frequency band combination indication.

In an embodiment, the frequency information for PRS includes one of the following: the frequency band indication, which indicates the frequency layers of PRSs for bandwidth aggregation; and the frequency band combination indication, which indicates the frequency layer combinations of PRSs capable of bandwidth aggregation.

In another embodiment, the frequency information for SRS includes one of the following: the frequency band indication, which indicates the carriers of SRSs for bandwidth aggregation; the frequency band combination indication, which indicates the carrier combinations of SRSs capable of bandwidth aggregation.

In some embodiments, the request information may further include priority information, where the priority information indicates the priorities corresponding to the frequency layer combinations and/or the carrier combinations. It can be understood that for the multiple frequency layer combinations and/or carrier combinations capable of bandwidth aggregation as indicated by the frequency information, the frequency layer combination and/or carrier combination with the highest priority is determined based on the priority information corresponding to each frequency layer combination and/or carrier combination. Bandwidth aggregation is then performed on the multiple frequency layers within the frequency layer combination and/or on the multiple carriers within the carrier combination.

In one embodiment, if the frequency information of the PRS includes the frequency band combination indication;
the request information for the on-demand PRS further includes priority information indicating the priorities of the frequency layer combinations of the PRS.

In another embodiment, if the frequency information of the SRS includes the frequency band combination indication;
the request information for the SRS further includes priority information indicating the priorities of the carrier combinations of the SRS.

In some embodiments, the request information may further include a first identifier (ID), which includes the configuration ID, the resource set ID, and/or the resource IDs associated with the positioning reference signals for which bandwidth aggregation is requested.

The resource ID may be used to uniquely identify a positioning reference signal resource. A positioning reference signal resource may be the smallest granularity of a positioning reference signal configuration, and one positioning reference signal resource corresponds to a transmission beam, a carrier, or a frequency layer of one positioning reference signal.

The resource set ID may be used to uniquely identify a positioning reference signal resource set. A positioning reference signal resource set is a group of positioning reference signal resources used for transmitting positioning reference signals. The positioning reference signal resources within a positioning reference signal resource set have the same period, number of symbols, etc. One positioning reference signal resource set may include one or more positioning reference signal resources.

The configuration ID may be used to uniquely identify the positioning reference signal configuration. Different positioning reference signal configurations have different configuration IDs.

The network device may send multiple predefined sets of positioning reference signal configurations to the terminal. It can be understood that the positioning requirements that various sets of positioning reference signal configurations can meet may be different. The terminal may select one set of positioning reference signal configurations from the multiple sets of positioning reference signal configurations for positioning measurement based on its own positioning requirements.

It should be noted that the transmission periods, transmission bandwidths, and/or transmission resources of the positioning reference signals corresponding to different positioning reference signal configurations are different.

In some embodiments, the request information may further include a second identifier (ID), which includes a predefined positioning reference signal configuration, where the predefined positioning reference signal configuration is a positioning reference signal configuration configured with bandwidth aggregation.

It should be noted that the second identifier (ID) may be used to indicate the predefined positioning reference signal configuration. It should also be noted that the network device predefines multiple positioning reference signal configurations for the terminal (i.e., a second positioning reference signal configuration set), and the second positioning reference signal configuration set includes at least one positioning reference signal configuration configured with bandwidth aggregation. Each positioning reference signal configuration in the second positioning reference signal configuration set has an identifier.

It can be understood that if the second identifier (ID) in the request information is the ID corresponding to the positioning reference signal configuration with bandwidth aggregation configured, it indicates that the terminal requests bandwidth aggregation for the positioning reference signals; if the second identifier (ID) in the request information is the ID corresponding to other positioning reference signal configurations, it indicates that the terminal does not request bandwidth aggregation for the positioning reference signals.

In an embodiment, the positioning reference signal configuration may include at least one of the following: a bandwidth part (BWP) identifier (ID) corresponding to the positioning reference signal resource; a frequency layer ID corresponding to the positioning reference signal resource; an access network device ID corresponding to the positioning reference signal resource; a TRP ID corresponding to the positioning reference signal resource; a positioning reference signal resource set ID; and a positioning reference signal resource ID.

In some embodiments, the request information may further include an access device indication, which indicates the access device that performs bandwidth aggregation on the positioning reference signals. It should be noted that the access device may be a base station or a TRP, and the access device indication may include a base station ID and/or a TRP ID.

One access device may be associated with one or more positioning reference signal resource sets, and each positioning reference signal resource set may include one or more positioning reference signal resources.

The network device receives the request information containing the access device indication, and performs bandwidth aggregation on the positioning reference signals associated with the access device requested by the terminal based on the access device indication.

In the embodiments of the present disclosure, by carrying frequency information, priority information, a first identifier (ID), a second identifier (ID), and/or an access device indication in the request information, the network device can determine, based on the request information, multiple positioning reference signal resources for which the terminal requests bandwidth aggregation, thereby completing the configuration of the multiple positioning reference signal resources and implementing bandwidth aggregation of the multiple positioning reference signals. In the subsequent positioning process, the bandwidth-aggregated positioning reference signal is used for performing positioning measurement, thereby improving the positioning accuracy of the terminal.

In some embodiments, the frequency information includes at least one of the following: frequency band numbers; offsets relative to a reference frequency value and/or bandwidths; identifiers of bandwidth parts (BWPs).

In the embodiment of the present disclosure, the frequency band numbers are used to indicate the frequency bands of the positioning reference signals for which the transmission bandwidths are aggregated. The offset relative to the reference frequency value may be the frequency offset between a reference frequency point and a measurement frequency point. In an embodiment, the reference frequency point may be reference point A or reference point B; the offset relative to the reference frequency value may be the point A frequency offset (offset of Point A) or the Point B frequency offset (offset of Point B).

The identifiers of the BWPs are used to indicate the BWPs where the frequency layers and/or the carriers for bandwidth aggregation are located, or to indicate the locations of the frequency layers and/or the carriers for bandwidth aggregation on the BWPs.

The terminal sends frequency information including frequency band numbers, offsets relative to a reference frequency value, bandwidths, and/or BWP identifiers to inform the network device that the terminal requests to perform bandwidth aggregation on the positioning reference signals associated with the above frequency information, so that the network device can configure resources for the positioning reference signals associated with the above frequency information.

In some embodiments, the method further includes:
sending a predefined first positioning reference signal configuration set, where the first positioning reference signal configuration set includes configuration IDs, resource set IDs and/or resource IDs associated with the multiple positioning reference signals;
sending a predefined second positioning reference signal configuration set, where the second positioning reference signal configuration set includes at least one positioning reference signal configuration configured with bandwidth aggregation.

It should be noted that, the first positioning reference signal configuration set may include multiple positioning reference signal configurations predefined by the network device for the terminal. The positioning reference signal configurations include the configuration IDs, the resource set IDs, and/or resource IDs associated with the corresponding positioning reference signals.

The network device sends the first positioning reference signal configuration set to the terminal, enabling the terminal device to select the configuration ID, resource set ID, and/or resource IDs associated with the positioning reference signals used for positioning measurement based on the multiple positioning reference signal configurations in the first positioning reference signal configuration set. The terminal device then carries the configuration ID, resource set ID, and/or resource IDs associated with the positioning reference signals in the request information, and sends the request information to the network device to request the network device to perform bandwidth aggregation on the positioning reference signals associated with the configuration ID, resource set ID, and/or resource IDs.

The second positioning reference signal configuration set may include multiple positioning reference signal configurations predefined by the network device for the terminal. At least one of the multiple positioning reference signal configurations is associated with positioning reference signals that are capable of bandwidth aggregation.

The network device sends the second positioning reference signal configuration set to the terminal, so that the terminal device can select the positioning reference signal configuration associated with the positioning reference signal for positioning measurement based on the multiple positioning reference signal configurations in the second positioning reference signal configuration set.

If the second identifier carried by the terminal in the request information is the ID corresponding to the positioning reference signal configuration configured with bandwidth aggregation, it indicates that the terminal requests to perform bandwidth aggregation on the positioning reference signals associated with the positioning reference signal configuration configured with bandwidth aggregation.

If the second identifier carried by the terminal in the request information is the ID corresponding to another positioning reference signal configuration in the second positioning reference signal configuration set, it indicates that the terminal requests to use the positioning reference signal corresponding to this positioning reference signal configuration for positioning measurement, but does not request to perform bandwidth aggregation on the positioning reference signal corresponding to this positioning reference signal configuration. As shown in FIG. 7, an embodiment of the present disclosure provides an information processing method, which is executed by a network device and includes the following step.

Step S501: parameter configuration is performed on any two positioning reference signals used for bandwidth aggregation.

After parameter configuration, any two positioning reference signals have at least one of the following parameters the same: the resource periodicity; the resource set periodicity; the bandwidth; the number of resources occupied by one positioning reference signal; the repetition parameter of the positioning reference signal.

It should be noted that the resource periodicity, the resource set periodicity, the resource bandwidth, the number of resources occupied by one positioning reference signal, and resource repetition parameter (resource repetition factor) are configuration parameters of the positioning reference signal.

The prerequisite for performing bandwidth aggregation on two positioning reference signals is that the parameter values of one or more configuration parameters among the resource periodicity, the resource set periodicity, the bandwidth, the number of resources occupied by the positioning reference signal, and the repetition parameter of the positioning reference signal of the two positioning reference signals are the same.

In the embodiments of the present disclosure, the network device receives the request information, and performs resource configuration on any two positioning reference signals for which the terminal requests bandwidth aggregation based on the request information. This ensures that the configuration parameters of the resources of any two positioning reference signals for which bandwidth aggregation is requested meet the prerequisite conditions for bandwidth aggregation, thereby facilitating bandwidth aggregation on any two positioning reference signals requested by the terminal.

In some embodiments, the number of resources occupied by one positioning reference signal includes: the number of time units occupied by one positioning reference signal; where the time units include: symbols, mini-slots, or slots; or the number of comb resources occupied by one positioning reference signal.

In the embodiments of the present disclosure, the number of time units occupied by one positioning reference signal is used to describe the number of time-domain resources occupied by the positioning reference signal. The time units include: symbols, mini-slots, or slots.

The positioning reference signal resource may have comb structures, and the terminal may send the positioning reference signal on one of the comb structures. The number of comb resources (Comb Size N) is used to describe the number of inner subcarriers carrying the positioning reference signal in each symbol period of the positioning reference signal resource configuration. For example, if the number of comb resources occupied by the positioning reference signal is 4, it indicates that the positioning reference signal is carried on every 4th subcarrier of the positioning symbol.

In the embodiments of the present disclosure, based on the request information from the terminal, the network device performs resource configuration on any two positioning reference signals for bandwidth aggregation. This ensures that the number of time units or the number of comb resources occupied by any two positioning reference signals is the same, thereby making the configuration parameters of the resources of any two positioning reference signals for which bandwidth aggregation is requested meet the prerequisite conditions for bandwidth aggregation, and facilitating the bandwidth aggregation on any two positioning reference signals requested by the terminal.

In some embodiments, receiving the request information includes:
receiving request information for downlink on-demand positioning reference signal (PRS); where the network device is a core network device; or
receiving request information for uplink sounding reference signal (SRS); where the network device is an access network device.

In the embodiments of the present disclosure, the positioning reference signal may include: an uplink sounding reference signal (SRS) and a downlink on-demand positioning reference signal (PRS).

Since the SRS is transmitted by the terminal to the access network device, in order for the access network device to receive multiple bandwidth-aggregated SRSs and perform positioning measurement based on these bandwidth-aggregated SRSs, the terminal may send SRS request information to the access network device. This allows the access network device to configure SRS resources for the terminal based on the SRS request information thereby enabling the terminal to transmit SRSs, and to complete the positioning measurement.

Since the on-demand PRS is transmitted by the access network device to the terminal, in order for the terminal to receive multiple bandwidth-aggregated on-demand PRSs and perform positioning measurement based on these bandwidth-aggregated on-demand PRSs, the terminal may send on-demand PRS request information to the core network device according to its own needs. This enables the core network device to provide PRS configuration to the terminal based on the on-demand PRS request information. After obtaining the PRS configuration, the terminal receives the on-demand PRSs based on the PRS configuration and completes the positioning measurement.

In some embodiments, the request information for on-demand PRS is carried in a long term evolution positioning protocol (LPP) request assistance data message.

In the embodiments of the present disclosure, the terminal may add the request information for on-demand PRS to the LPP request assistance data message. After receiving the LPP request assistance data message sent by the terminal, the core network device obtains the request information for on-demand PRS from the LPP request assistance data message, so as to perform bandwidth aggregation on multiple PRSs based on the terminal's request.

It should be noted that the LPP message is a signaling message between the terminal and the core network device used for exchanging information such as positioning capabilities. Here, the terminal may carry the request information for on-demand PRS in an uplink LPP message.

In an embodiment, the LPP request assistance data message includes one or more information fields for carrying PRS request messages. The information field may include multiple bits, where the multiple bits may be used to indicate frequency information, priority information, a first identifier (ID), a second identifier (ID), and/or an access device indication of multiple positioning reference signals for bandwidth aggregation.

In the embodiments of the present disclosure, by adding the request information to a dedicated signaling message, the request information for on-demand PRS is sent to the core network device while the terminal and the core network device transmit the dedicated signaling message, so as to request the core network device to perform bandwidth aggregation on the PRSs. In this way, there is no need for additional signaling or messages to carry and send the request information, which can reduce signaling overhead.

In some embodiments, the request information for SRS is carried in a Radio Resource Control (RRC) message or in a media access control control element (MAC CE).

In the embodiments of the present disclosure, by adding the request information for SRS to the RRC message, the access network device receives the RRC message and obtains the SRS request information from the RRC message, so as to perform bandwidth aggregation on multiple SRSs based on the terminal's request.

It should be noted that RRC messages are signaling messages required for establishing, reestablishing, maintaining, and releasing RRC connections between the terminal and the access network device. Here, the terminal may carry the request information for SRS in an uplink RRC message.

It can be understood that one or more bits in the RRC message may be set to different bit values to carry request information for SRS with different contents.

By adding the request information for SRS to the MAC CE, the access network device receives the MAC CE and obtains the request information for SRS from the MAC CE to perform bandwidth aggregation on multiple SRSs based on the terminal's request.

It should be noted that MAC CE is a signaling message required for the terminal and access network device to exchange MAC layer control information.

In the embodiments of the present disclosure, by adding the request information for SRS to a dedicated signaling message, the SRS request information is sent to the access network device while the terminal and the access network device transmit the dedicated signaling message, so as to request the access network device to perform bandwidth aggregation on the SRSs. In this way, there is no need for additional signaling or messages to carry and send the request information, which can reduce signaling overhead.

In an embodiment, the terminal sends request information for positioning reference signal to the network device.

The manners in which the terminal sends the request information to the network device may include the following.

The terminal sends request information for downlink on-demand positioning reference signal (PRS) to the core network device

The terminal sends request information for uplink sounding reference signal (SRS) to the access network device.

For on-demand PRS request information, the terminal may carry the on-demand PRS request information in an LPP request assistance data message.

The on-demand PRS request may serve as the request information for on-demand PRS, and the LPP request assistance data message is used to carry the on-demand PRS request. Alternatively, a new information field may be added to the LPP request assistance data message to carry the request information for on-demand PRS.

For example, the on-demand PRS request may be defined as:

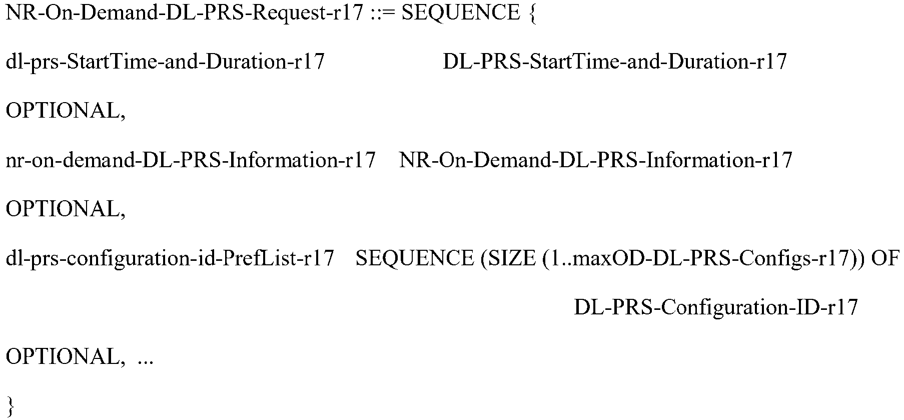

It should be noted that NR-On-Demand-DL-PRS-Request-r17 is the on-demand PRS request. DL-PRS-StartTime-and-Duration-r17 are the start time and duration parameters of the downlink PRS. NR-On-Demand-DL-PRS-Information-r17 is the on-demand downlink PRS information parameter. dl-prs-configuration-id-PrefList-r17 is the predefined list of downlink PRS configuration identifiers parameter. DL-PRS-Configuration-ID-r17 is the downlink PRS configuration identifier requested by the terminal.

The start time and duration parameters of the downlink PRS may be defined as:

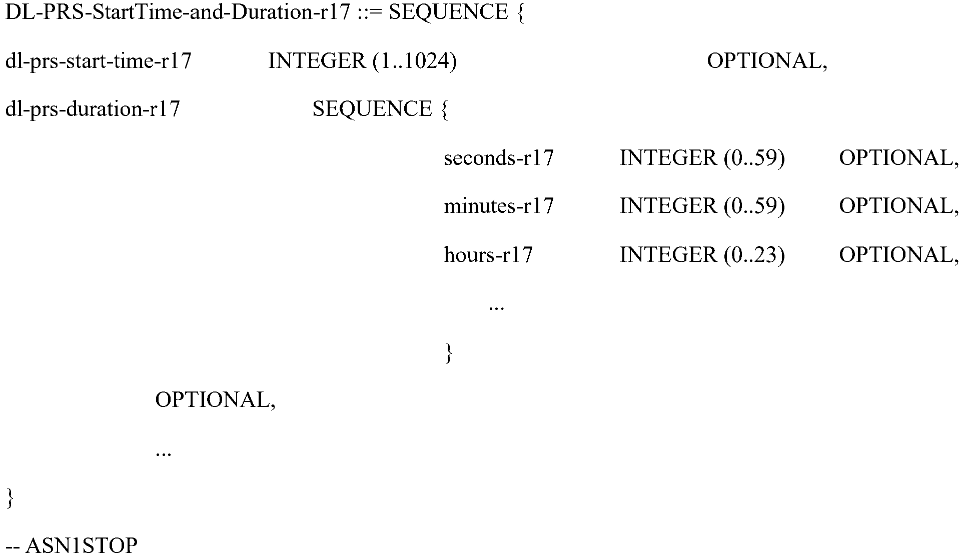

It should be noted that dl-prs-start-time-r17 is the start time of the downlink PRS; dl-prs-duration-r17 is the duration of the downlink PRS.

For each frequency layer of the PRS, it can be defined as:

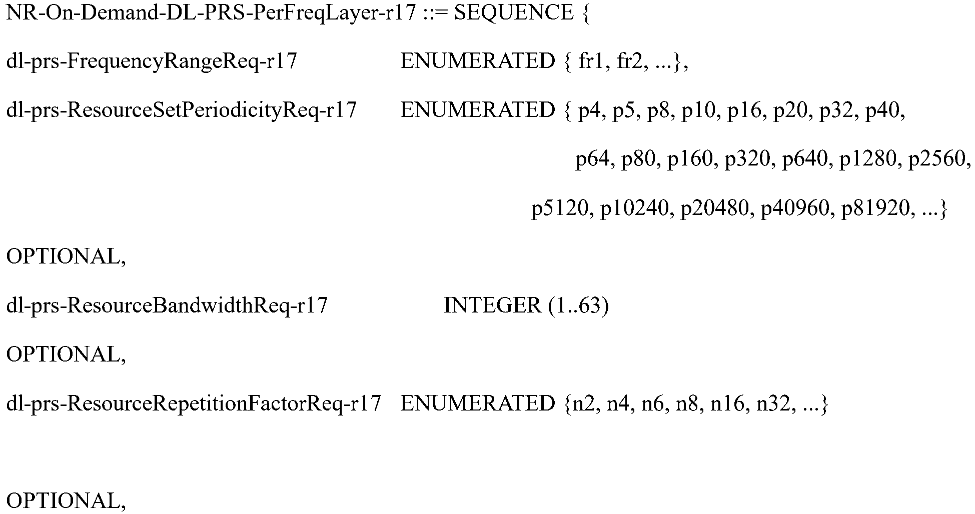

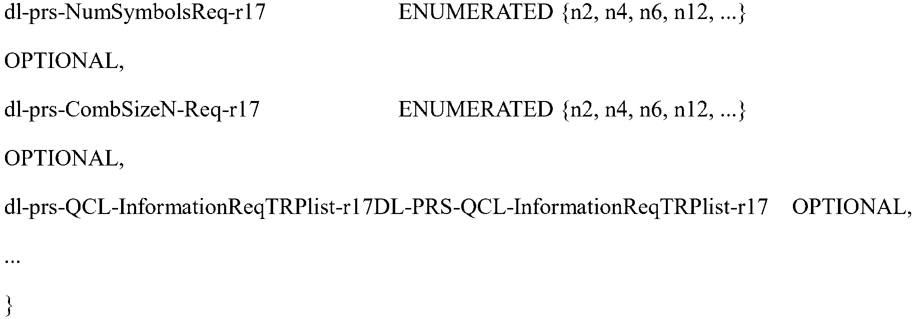

It should be noted that NR-On-Demand-DL-PRS-PerFreqLayer-r17 is the frequency layer configuration of the on-demand downlink PRS; dl-prs-FrequencyRangeReq-r17 is the frequency range parameter of the downlink PRS; dl-prs-ResourceSetPeriodicityReq is the resource set periodicity of the downlink PRS; dl-prs-ResourceBandwidthReq is the resource bandwidth of the downlink PRS; dl-prs-ResourceRepetitionFactorReq-rl7 is the resource repetition parameter of the downlink PRS; dl-prs-NumSymbolsReq-rl7 is the number of symbols of the downlink PRS; dl-prs-CombSizeN-Req-r17 is the number of comb resources of the downlink PRS; and dl-prs-QCL-InformationReq is the QCL parameter of the downlink PRS.

As an embodiment, the request information may include: a bandwidth aggregation frequency layer request.

The bandwidth aggregation frequency layer request is used to request bandwidth aggregation for frequency layers associated with multiple PRSs.

The bandwidth aggregation frequency layer request includes at least one of the following:
an indication of frequency layers for bandwidth aggregation; for example, the indication of frequency layers for bandwidth aggregation is used to request bandwidth aggregation for frequency layers f1 and f2;
an indication of frequency layer combinations for bandwidth aggregation; for example, the indication of frequency layer combinations for bandwidth aggregation is used to request bandwidth aggregation for frequency layers f1 and f2, and bandwidth aggregation for frequency layers f1 and f3; and
priority information indicating the priority of each frequency layer combination; for example, the priority information indicates {f1,f2}>{f1,f3}>{f1,f2,f3}.

As an embodiment, the request information may further include: a TRP indication, which is used to request bandwidth aggregation for PRS resources of multiple frequency layers of the TRP.

As an embodiment, the request information may further include:
a PRS configuration identifier (configuration ID), requesting bandwidth aggregation for PRSs associated with the PRS configuration identifier across multiple frequency layers.
a PRS resource set identifier (resource set ID), requesting bandwidth aggregation for PRSs associated with the PRS resource set identifier across multiple frequency layers.

PRS resource identifiers (resource IDs), requesting bandwidth aggregation for PRSs associated with the PRS resource identifiers across multiple frequency layers.

This embodiment can be used in combination with the previous embodiment.

For example, the request information may include: a TRP indication and a PRS resource set identifier, which are used to request bandwidth aggregation for the PRSs associated with the resource set identifier within the TRP across multiple frequency layers.

For another example, the request information may include: a TRP indication and PRS resource identifiers, which are used to request bandwidth aggregation for the PRSs associated with the resource identifiers within the TRP across multiple frequency layers.

As an embodiment, the terminal may receive multiple sets of predefined PRS configurations (i.e., PRS configuration set) sent by the core network device, where the multiple sets of PRS configurations include at least one PRS configuration configured with bandwidth aggregation. The request information may include: a PRS configuration identifier, a PRS resource set identifier, and/or PRS resource identifiers.

It can be understood that if the PRS configuration identifier, PRS resource set identifier, and/or PRS resource identifiers in the request information is the predefined PRS configuration configured with bandwidth aggregation or the configuration parameter in the PRS configuration, it indicates that the terminal requests bandwidth aggregation for the PRSs associated with the PRS configuration identifier, PRS resource set identifier, and/or PRS resource identifiers across multiple frequency layers.

If the PRS configuration identifier, PRS resource set identifier, and/or PRS resource identifiers in the request information is not the predefined PRS configuration configured with bandwidth aggregation or the configuration parameter in the PRS configuration, it indicates that the terminal does not request bandwidth aggregation for the PRSs associated with the PRS configuration identifier, PRS resource set identifier, and/or PRS resource identifiers across multiple frequency layers.

For example, the on-demand downlink PRS configuration set may be defined as:

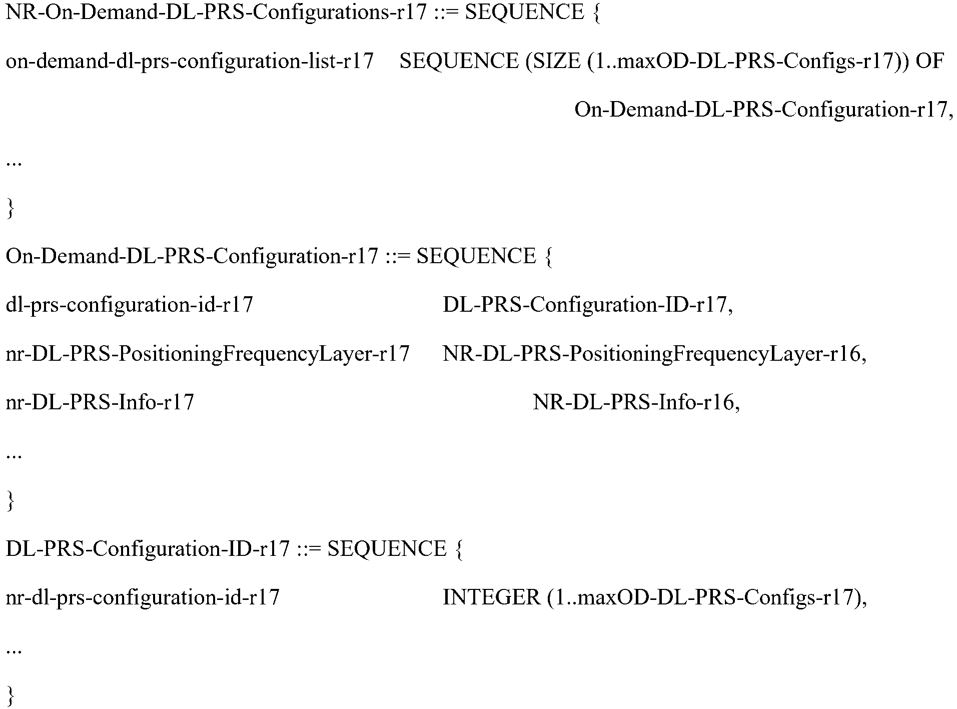

It should be noted that NR-On-Demand-DL-PRS-Configurations-r17 is the on-demand downlink PRS configuration set; On-Demand-DL-PRS-Configuration-r17 is the on-demand downlink PRS configuration; DL-PRS-Configuration-ID-r17 is the on-demand downlink PRS configuration identifier; nr-DL-PRS-PositioningFrequencyLayer-r17 is the downlink PRS frequency layer; and nr-DL-PRS-Info-r17 is the downlink PRS information.

The terminal sends request information, requesting the core network device to perform resource configuration on the PRS resources for which bandwidth aggregation is requested, such that one or more of the following parameters of any two PRSs for which bandwidth aggregation is requested are the same: the PRS resource set periodicity; the PRS resource bandwidth; the PRS resource repetition parameter; the number of PRS symbols; and the PRS comb resource.

For example, the terminal may carry the PRS resource set periodicity in dl-prs-ResourceSetPeriodicityReq-r17, carry the PRS resource bandwidth in dl-prs-ResourceSetPeriodicityReq-r17, carry the PRS resource repetition parameter in dl-prs-ResourceRepetitionFactorReq-r17, carry the number of PRS symbols in dl-prs-NumSymbolsReq-r17, and carry the PRS comb resource in dl-prs-CombSizeN-Req-rl7.

For SRS request information, the terminal may carry the SRS request information in an RRC message or a MAC CE.

The SRS request may serve as the request message for SRS, and is carried in an RRC message or a MAC CE.

Alternatively, a new information field may be added to the RRC message or MAC CE to carry the request information for PRS.

As an embodiment, the request information may include: a bandwidth aggregation carrier indication; bandwidth aggregation carrier combination indication; and priority information.

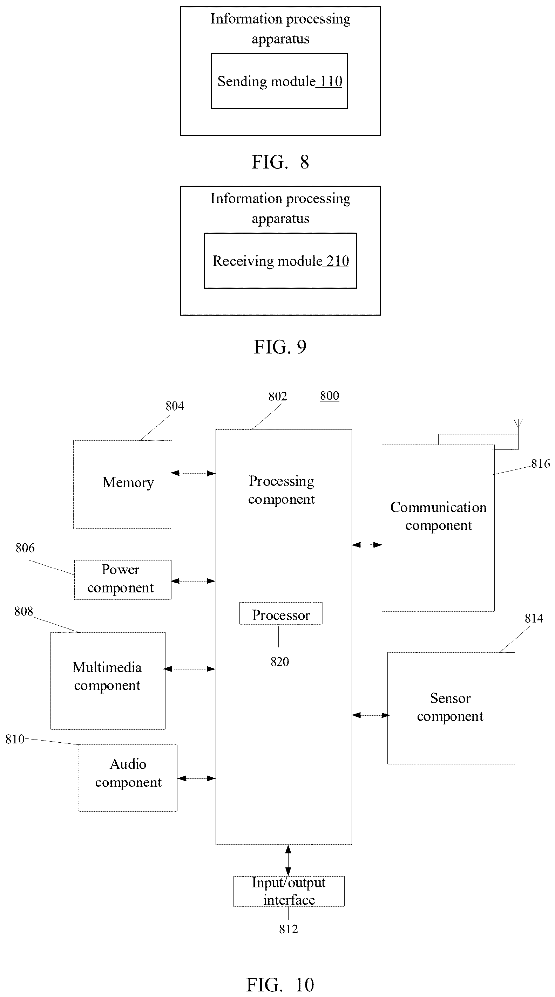

As shown in FIG. 8, an embodiment of the present disclosure provides an information processing device, which is applied to a terminal. The information processing apparatus includes:
a sending module 110, configured to send request information, where the request information is used for requesting to perform bandwidth aggregation on positioning reference signals.

In some embodiments, the request information includes: an on-demand positioning reference signal (PRS) request, or a sounding reference signal (SRS) request.

In some embodiments, the request information includes at least one of the following: frequency information, indicating frequency layers, carriers, frequency layer combinations and/or carrier combinations for bandwidth aggregation; priority information, indicating priorities corresponding to the frequency layer combinations and/or the carrier combinations; a first identifier (ID), including a configuration ID, a resource set ID, and/or resource IDs associated with the positioning reference signals for which bandwidth aggregation is requested; a second identifier (ID), including a predefined positioning reference signal configuration, where the predefined positioning reference signal configuration is a positioning reference signal configuration configured with bandwidth aggregation; and an access device indication, indicating an access device that performs bandwidth aggregation on the positioning reference signals.

In some embodiments, the frequency information includes at least one of the following: frequency band numbers; offsets relative to a reference frequency value and/or bandwidths; and identifiers of bandwidth parts (BWPs).

In some embodiments, at least one of following parameters of any two positioning reference signals for bandwidth aggregation is the same: a resource periodicity; a resource set periodicity; a bandwidth; a number of resources occupied by one positioning reference signal; and a repetition parameter of the positioning reference signal.

In some embodiments, the number of resources occupied by one positioning reference signal includes: a number of time units occupied by one positioning reference signal; where the time unit includes: a symbol, a mini-slot, or a slot; or, a number of comb resources occupied by one positioning reference signal.

In some embodiments, the sending module 110 is configured to: send request information for downlink on-demand positioning reference signal (PRS) to a core network device; or send request information for uplink sounding reference signal (SRS) to an access network device.

In some embodiments, the request information is carried in a long term evolution positioning protocol (LPP) request assistance data message sent to the core network device.

In some embodiments, the request information sent to the access network device is carried in a radio resource control (RRC) message, or in a media access control control element (MAC CE).

As shown in FIG. 9, an embodiment of the present disclosure provides an information processing apparatus applied to a network device. The information processing apparatus includes: a receiving module, configured to receive request information, where the request information is used for requesting to perform bandwidth aggregation on positioning reference signals.

In some embodiments, the request information includes: an on-demand positioning reference signal (PRS) request, or a sounding reference signal (SRS) request.

In some embodiments, the request information includes at least one of the following: frequency information, indicating frequency layers, carriers, frequency layer combinations and/or carrier combinations for bandwidth aggregation; priority information, indicating priorities corresponding to the frequency layer combinations and/or the carrier combinations; a first identifier (ID), including a configuration ID, a resource set ID, and/or resource IDs associated with the positioning reference signals for which bandwidth aggregation is requested; a second identifier (ID), including a predefined positioning reference signal configuration, where the predefined positioning reference signal configuration is a positioning reference signal configuration configured with bandwidth aggregation; and an access device indication, indicating an access device that performs bandwidth aggregation on the positioning reference signals.

In some embodiments, the frequency information includes at least one of the following: frequency band numbers; offsets relative to a reference frequency value and/or bandwidths; identifiers of bandwidth parts (BWPs).

In some embodiments, the receiving module 210 is further configured to:
send a predefined first positioning reference signal configuration set, where the first positioning reference signal configuration set includes configuration IDs, resource set IDs and/or resource IDs associated with the multiple positioning reference signals; or, send a predefined second positioning reference signal configuration set, where the second positioning reference signal configuration set includes at least one positioning reference signal configuration configured with bandwidth aggregation.

In some embodiments, the receiving module 210 is further configured to:
perform parameter configuration on any two positioning reference signals for bandwidth aggregation; where at least one of following parameters of the any two positioning reference signals after performing the parameter configuration is the same: a resource periodicity; a resource set periodicity; a bandwidth; a number of resources occupied by one positioning reference signal; and a repetition parameter of the positioning reference signal.

In some embodiments, the number of resources occupied by one positioning reference signal includes: a number of time units occupied by one positioning reference signal; where the time unit includes: a symbol, a mini-slot, or a slot; or, a number of comb resources occupied by one positioning reference signal.

In some embodiments, the receiving module 210 is further configured to:
receive request information for downlink on-demand positioning reference signal (PRS); where the network device is a core network device; or
receive request information for uplink sounding reference signal (SRS); where the network device is an access network device.

In some embodiments, the request information for on-demand PRS is carried in a long term evolution positioning protocol (LPP) request assistance data message.

In some embodiments, the request information for SRS is carried in a radio resource control (RRC) message, or in a media access control control element (MAC CE).

The present disclosure provides a communication device, including:
a memory, configured to store processor-executable instructions; and
processors, respectively connected to the memory;
where, the processor is configured to execute the policy processing method provided by any of the above technical solutions.

The processor may include various types of storage media, which are non-transitory computer storage media that can continue to retain information stored thereon after the communication device loses power.

Here, the communication device includes: a UE or a network element, which may be any one of the aforementioned first to fourth network elements.

The processor may be connected to the memory via a bus or the like, and may be configured to read an executable program stored in the memory, for example, at least one of the methods shown in FIG. 2, and FIGS. 4 to 7.

FIG. 10 is a block diagram of a UE 800 according to an exemplary embodiment, and the UE 800 may be one of the aforementioned terminal devices. For example, the UE 800 may be a mobile phone, a computer, a digital broadcast user equipment, a messaging device, a gaming console, a tablet device, a medical device, a fitness device, a personal digital assistant, and the like.

Referring to FIG. 10, UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to generate all or part of the steps in the above-described methods. Moreover, the processing component 802 may include one or more modules which facilitate the interaction between the processing component 802 and other components. For instance, the processing component 802 may include a multimedia module to facilitate the interaction between the multimedia component 3008 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the device 800, relative positioning of components, e.g., the display and the keypad, of the UE 800, a change in location of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In exemplary embodiments, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 804, executable by the processor 820 in the UE 800, for generating the above-described methods. For example, the non-transitory computer-readable storage medium may be a ROM, a random access memory (RAM), a CD-ROM, a magnetic tape, a floppy disc, an optical data storage device, and the like.

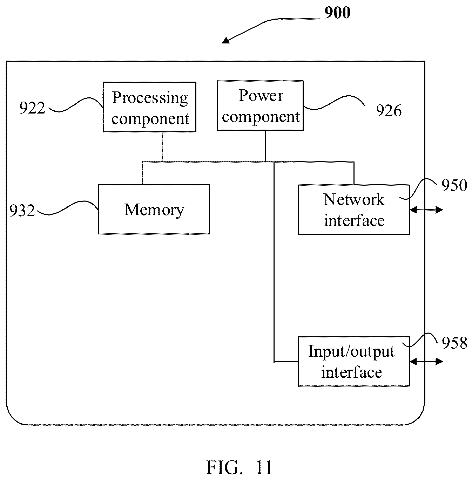

As shown in FIG. 11, an embodiment of the present disclosure illustrates the structure of an access device. For example, the communication device 900 may be provided as a network-side device. The communication device may be various network elements such as the aforementioned access network elements and/or network functions.

Referring to FIG. 11, the communication device 900 includes a processing component 922, which further includes one or more processors, and a memory resource represented by a memory 932 for storing instructions executable by the processing component 922, such as an application program. The application program stored in the memory 932 may include one or more modules, each corresponding to a set of instructions. In addition, the processing component 922 is configured to execute instructions to perform any of the above methods applied to the access device, such as any one of the methods shown in FIGS. 4 to 9.

The communication device 900 may further include a power component 926 configured to perform power management of the communication device 900, a wired or wireless network interface 950 configured to connect the network device 900 to a network, and an input/output (I/O) interface 958. The network device 900 may operate based on an operating system stored in the memory 932, such as a Windows Server^{™}, a Mac OS X^{™}, a Unix^{™}, a Linux^{™}, a Free BSD^{™} or the like.

Where no contradiction exists, each step in a certain implementation mode or embodiment may be implemented as an independent embodiment, and the steps can be combined arbitrarily. For example, a solution obtained by removing some steps from a certain implementation or embodiment may also be implemented as an independent embodiment. In addition, the order of the steps in a certain implementation or embodiment can be exchanged arbitrarily. Furthermore, the optional modes or optional examples in a certain implementation or embodiment can be combined arbitrarily. Besides, different implementation modes or embodiments can be combined arbitrarily. For instance, some or all steps of different implementations or embodiments can be combined arbitrarily, and a certain implementation or embodiment can be combined arbitrarily with the optional modes or optional examples of other implementations or embodiments.

Other embodiments of the present disclosure will be apparent to those skilled in the art from consideration of the specification and practice of the contents disclosed here. The present disclosure is intended to cover any variations, uses, or adaptations of the embodiments of the present disclosure, which follows the general principles thereof and includes the common knowledge or habitual technical means in this technical field that is not disclosed in the present disclosure. The specification and embodiments are considered as exemplary only, with a true scope and spirit of the embodiments of the present disclosure being indicated by the appending claims.

It will be appreciated that the embodiments of the present disclosure are not limited to the exact construction that has been described above and illustrated in the accompanying drawings, and various modifications and changes can be made without departing from the scope thereof. The scope of the embodiments of the present disclosure is only limited by the appended claims.

## Claims

1. An information processing method, performed by a terminal, comprising:
sending (S101) request information, wherein the request information is used for requesting to perform bandwidth aggregation on positioning reference signals.

2. The method according to claim 1, wherein the request information comprises: an on-demand positioning reference signal, PRS, request, or a sounding reference signal, SRS, request.

3. The method according to claim 1 or 2, wherein the request information comprises at least one of:
frequency information, indicating frequency layers, carriers, frequency layer combinations and/or carrier combinations for bandwidth aggregation;
priority information, indicating priorities corresponding to the frequency layer combinations and/or the carrier combinations;
a first identifier, ID, comprising a configuration ID, a resource set ID, and/or resource IDs associated with the positioning reference signals for which bandwidth aggregation is requested;
a second identifier, ID, comprising a predefined positioning reference signal configuration, wherein the predefined positioning reference signal configuration is a positioning reference signal configuration configured with bandwidth aggregation; and
an access device indication, indicating an access device that performs bandwidth aggregation on the positioning reference signals.

4. The method according to claim 3, wherein the frequency information comprises at least one of:
frequency band numbers;
offsets relative to a reference frequency value and/or bandwidths; and
identifiers of bandwidth parts, BWPs.

5. The method according to any one of claims 1 to 4, wherein at least one of following parameters of any two positioning reference signals for bandwidth aggregation is the same:
a resource periodicity;
a resource set periodicity;
a bandwidth;
a number of resources occupied by one positioning reference signal; and
a repetition parameter of the positioning reference signal.

6. The method according to claim 5, wherein the number of resources occupied by one positioning reference signal comprises:
a number of time units occupied by one positioning reference signal; wherein the time unit comprises: a symbol, a mini-slot, or a slot;
or,
a number of comb resources occupied by one positioning reference signal.

7. The method according to any one of claims 1 to 6, wherein sending (S201) the request information comprises:
sending request information for downlink on-demand positioning reference signal, PRS, to a core network device, wherein the request information is carried in a long term evolution positioning protocol, LPP, request assistance data message sent to the core network device;
or,
sending request information for uplink sounding reference signal, SRS, to an access network device, wherein the request information sent to the access network device is carried in a radio resource control, RRC, message, or in a media access control control element, MAC CE.

8. An information processing method, performed by a network device, comprising:
receiving (S401) request information, wherein the request information is used for requesting to perform bandwidth aggregation on positioning reference signals.

9. The method according to claim 8, wherein the request information comprises: an on-demand positioning reference signal, PRS, request, or a sounding reference signal, SRS, request.

10. The method according to claim 8 or 9, wherein the request information comprises at least one of:
frequency information, indicating frequency layers, carriers, frequency layer combinations and/or carrier combinations for bandwidth aggregation;
priority information, indicating priorities corresponding to the frequency layer combinations and/or the carrier combinations;
a first identifier, ID, comprising a configuration ID, a resource set ID, and/or resource IDs associated with the positioning reference signals for which bandwidth aggregation is requested;
a second identifier, ID, comprising a predefined positioning reference signal configuration, wherein the predefined positioning reference signal configuration is a positioning reference signal configuration configured with bandwidth aggregation; and
an access device indication, indicating an access device that performs bandwidth aggregation on the positioning reference signals.

11. The method according to claim 10, further comprising:
sending a predefined first positioning reference signal configuration set, wherein the first positioning reference signal configuration set comprises configuration IDs, resource set IDs and/or resource IDs associated with the multiple positioning reference signals;
or,
sending a predefined second positioning reference signal configuration set, wherein the second positioning reference signal configuration set comprises at least one positioning reference signal configuration configured with bandwidth aggregation.

12. The method according to any one of claims 8 to 11, further comprising:
performing (S501) parameter configuration on any two positioning reference signals for bandwidth aggregation;
wherein at least one of following parameters of the any two positioning reference signals after performing the parameter configuration is the same:
a resource periodicity;
a resource set periodicity;
a bandwidth;
a number of resources occupied by one positioning reference signal; and
a repetition parameter of the positioning reference signal.

13. The method according to any one of claims 8 to 12, wherein receiving the request information comprises:
receiving request information for downlink on-demand positioning reference signal, PRS; wherein the network device is a core network device, wherein the request information for on-demand PRS is carried in a long term evolution positioning protocol, LPP, request assistance data message; or
receiving request information for uplink sounding reference signal, SRS; wherein the network device is an access network device, wherein the request information for SRS is carried in a radio resource control, RRC, message, or in a media access control control element, MAC CE.

14. An information processing apparatus, applied to a terminal, wherein the apparatus comprises:
a sending module (110), configured to send request information, wherein the request information is used for requesting to perform bandwidth aggregation on positioning reference signals.

15. An information processing apparatus, applied to a network device, wherein the apparatus comprises:
a receiving module (210), configured to receive request information, wherein the request information is used for requesting to perform bandwidth aggregation on positioning reference signals.
